Europäisches Patentamt

(19) European Patent Office

Office européen des brevets

(11) Numéro de publication : **0 241 377 B1**

(12)

# FASCICULE DE BREVET EUROPEEN

(45) Date de publication du fascicule du brevet :
**27.02.91 Bulletin 91/09**

(21) Numéro de dépôt : **87400793.3**

(22) Date de dépôt : **08.04.87**

(51) Int. Cl.⁵ : **B60K 1/00, A63B 55/08**

(54) Groupe motopropulseur amovible et véhicule associé tel que chariot de golf.

(30) Priorité : **11.04.86 FR 8605198**

(43) Date de publication de la demande :
**14.10.87 Bulletin 87/42**

(45) Mention de la délivrance du brevet :
**27.02.91 Bulletin 91/09**

(84) Etats contractants désignés :
**BE CH DE ES FR GB IT LI**

(56) Documents cités :
**GB-A- 114 537**
**US-A- 3 199 621**

(73) Titulaire : **Laguilharre, Pierre Robert**
**6, rue Robin**
**F-95880 Enghien les Bains (FR)**

(72) Inventeur : **Laguilharre, Pierre Robert**
**6, rue Robin**
**F-95880 Enghien les Bains (FR)**

(74) Mandataire : **Kedinger, Jean-Paul et al**
**c/o Cabinet Malemont 42, avenue du Président**
**Wilson**
**F-75116 Paris (FR)**

## Description

La présente invention a pour objet un groupe moto-propulseur amovible pour véhicule porteur de charge tel que chariot de golf, comprenant un moteur d'entraînement, un réducteur accouplé à ce moteur et monté à rotation à l'intérieur d'un carter par l'intermédiaire de roulements portée intérieurement par ledit carter, et un arbre moteur pourvu d'une roue motrice à chacune de ses extrémités et constitué de deux tronçons d'arbre s'étendant respectivement de part et d'autre dudit réducteur, au moins l'un des tronçons d'arbre étant disposé à l'intérieur d'une gaine solidarisée par l'une de ses extrémités au carter du réducteur.

D'après GB-A-114 537, on connaît déjà un groupe moto-propulseur de ce type.

On connait également des groupes moto-propulseurs pour véhicule porteur de charge dans lesquels l'arbre moteur actionné en rotation par l'intermédiaire -d'un réducteur, est destiné à être supporté par un ou deux paliers solidaires à demeure du châssis du véhicule porteur de charge.

Cette construction d'un ou deux paliers solidaires du châssis rend le groupe moto-propulseur également solidaire de ce dernier, ce qui nécessite un alignement précis de l'axe des roulements du réducteur avec l'axe du ou des paliers porteurs et, partant, un usinage également précis de ces derniers. D'autre part, ce ou ces paliers doivent être accolés aux roues motrices pour réduire ou annuler le porte-à-faux de ces derniers, ce qui nécessite un châssis de large dimension.

En outre, il n'existe pas la possibilité d'une séparation rapide du groupe motopropulseur du châssis du véhicule porteur de charge, ainsi que d'un dépannage et/ou un échange standard rapide du groupe moto-propulseur.

Par ailleurs, le prix de revient de l'ensemble est élevé à cause de la nécessité d'un usinage précis du ou des paliers supports des roues motrices et de la nécessité d'utiliser un châssis porteur de charge de grande largeur.

Le but de la présente invention est de remédier à ces inconvénients et pour ce faire, elle propose un groupe moto-propulseur du type défini au premier paragraphe de cette description qui se caractérise en ce que l'arbre moteur est actionné en rotation directement par le réducteur et en ce qu'au moins l'un des tronçons d'arbre est monté à rotation à l'intérieur de ladite gaine par l'intermédiaire d'un palier.

Le groupe moto-propulseur ainsi décrit constitue une unité indépendante et non solidaire à demeure du châssis du véhicule porteur de charge qu'il est destiné à équiper avec tous les avantages que cela présente.

Conformément à l'invention, la gaine s'étend de préférence jusqu'au voisinage immédiat de la roue portée par le tronçon d'arbre inséré dans ladite gaine, le palier étant situé au voisinage immédiat de l'extrémité libre de cette gaine. Ainsi, chaque palier est simplement inséré à l'extrémité de la gaine sans usinage ultérieur avec un porte-à-faux des roues motrices négligeable, avec séparation très aisée et rapide du groupe moto-propulseur du châssis du véhicule porteur. Il en résulte un prix de revient de l'ensemble du véhicule nettement réduit.

Selon une première variante, les deux tronçons d'arbre sont de même longueur auquel cas on préfère que chaque tronçon soit monté à rotation dans une gaine équipée de son palier. Suivant cette variante, le moteur accouplé au réducteur est placé sensiblement dans l'axe longitudinal du châssis du véhicule porteur.

Selon une seconde variante, les deux tronçons d'arbre sont de longueur différente auquel cas on préfère que seul le tronçon d'arbre le plus long soit monté à rotation dans une gaine équipée de son palier support de l'une des roues motrices, les roulements du réducteur faisant alors office de palier support de l'autre roue motrice.

Le réducteur du groupe moto-propulseur selon l'invention peut en particulier être du type à roue et vis tangente.

La roue du réducteur peut notamment être à arbre creux, chaque tronçon d'arbre étant alors articulé sur cet arbre creux par l'intermédiaire d'une rotule disposée dans ledit arbre creux et reliée à ce dernier par un moyen d'entrainement.

La roue du réducteur peut en variante être à arbre plein, au moins l'un des tronçons d'arbre étant alors articulé sur cet arbre plein par l'intermédiaire d'un cardan.

La présente invention concerne par ailleurs un véhicule porteur de charge tel que chariot de golf, comprenant un châssis et se caractérisant en ce qu'il comprend en outre le groupe moto-propulseur décrit ci-dessus, ledit châssis étant pourvu de moyens pour le solidariser de manière amovible à au moins une gaine dudit groupe moto-propulseur. Ces moyens de solidarisation peuvent par exemple être constitués par des encoches aptes à recevoir ladite gaine. Plusieurs modes de réalisation de l'invention sont décrits ci-après à titre d'exemples non limitatifs, en référence aux dessins annexés dans lesquels :

    – la figure 1 est une vue schématique en coupe selon la ligne CD de la figure 2 et représentant un groupe moto-propulseur accouplé à un véhicule porteur de charge,

    – la figure 2 est une vue schématique en coupe selon la ligne AB de la figure 1, le groupe moto-propulseur comportant deux tronçons d'arbre et deux gaines, respectivement de même longueur,

    – la figure 3 est une vue schématique en coupe longitudinale d'un groupe moto-propulseur comportant deux tronçons d'arbre de longueur différente, seul le tronçon d'arbre le plus long étant monté dans une gaine,

– la figure 4 est une vue détaillée et à plus grande échelle du groupe moto-propulseur équipant le véhicule objet des figures 1 et 2, avec réducteur à roue, à arbre creux, et à vis tangente,

– la figure 5 est une vue détaillée à plus grande échelle du groupe moto-propulseur équipant le véhicule objet des figures 1 et 2, avec réducteur à roue, à arbre plein, et à vis tangente, et

– la figure 6 est une vue détaillée à plus grande échelle du groupe moto-propulseur selon la figure 3, avec réducteur à roue, à arbre creux, et à vis tangente.

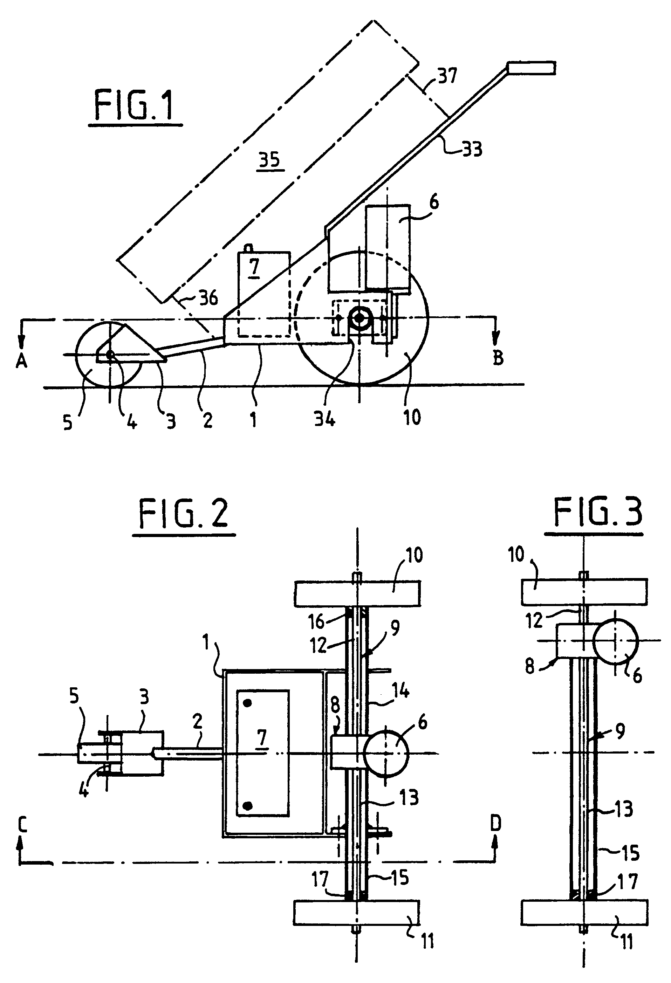

Le véhicule porteur de charge, par exemple un chariot de golf, représenté par les figures 1 et 2, comporte de manière connue en soi, un châssis 1 dont la partie avant est reliée par une tige 2 à un support 3 recevant l'axe 4 d'une roue d'appui 5, non motrice et d'un diamètre inférieur à celui des roues motrices 10, 11 dont il sera question ci-après.

Ce véhicule comporte par ailleurs, à l'arrière du châssis, un groupe moto-propulseur comprenant un moteur d'entraînement électrique 6, alimenté par une batterie 7 et accouplé à un réducteur 8 actionnant en rotation un arbre moteur 9 dont chaque extrémité est pourvue d'une roue motrice 10, 11. Cet arbre 9 est constitué de deux tronçons d'arbre 12, 13 disposés respectivement de part et d'autre du réducteur 8.

Conformément à la présente invention, l'un au moins des tronçons d'arbre 12, 13 est monté à rotation à l'intérieur d'une gaine. Plus précisément, dans le mode de réalisation illustré par les figure 2, 4 et 5, les deux tronçons 12, 13 sont de même longueur et montés respectivement à rotation à l'intérieur de gaines 14, 15 par l'intermédiaire de paliers 16, 17 insérés dans lesdites gaines, ces dernières étant fixées par l'une de leurs extrémités respectivement à des flasques 18, 19 solidarisées aux parties latérales du carter 20 du réducteur 8.

Par ailleurs, on notera que les gaines 14, 15 s'étendent desdits flasques jusqu'au voisinage immédiat des roues 10, 11, les paliers 16, 17 étant situés au voisinage immédiat de l'extrémité libre desdites gaines de sorte que les roues 10, 11 sont supportées par ces paliers avec un porte-à-faux négligeable par rapport à ces derniers.

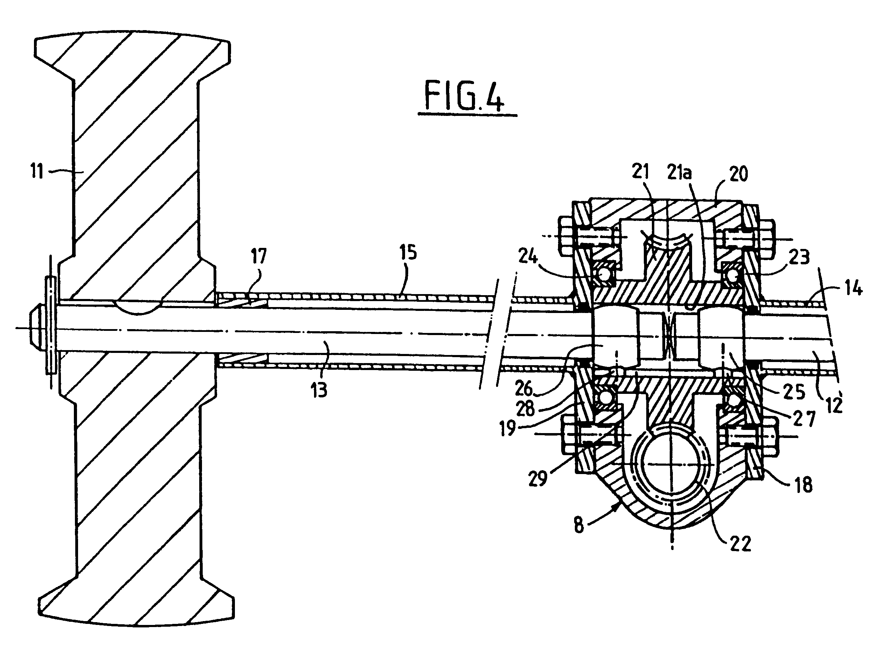

Dans le mode de réalisation représenté par la figure 4, le réducteur 8 comporte une roue lente 21 à arbre creux 21a, entraînée par une vis sans fin 22 en prise directe avec l'arbre du moteur 6. Cette roue lente 21 est montée à rotation sur le carter 20 par l'intermédiaire de deux roulements à billes 23, 24 et entraîne en rotation les deux tronçons d'arbre 12, 13, indépendants l'un de l'autre, respectivement par l'intermédiaire de deux rotules 25, 26 montées dans l'arbre creux de la roue 21, portées respectivement par l'extrémité libre de chaque tronçon 12, 13 et pourvues chacune d'un doigt d'entrainement 27, 28 glissé dans une rainure de clavetage 29 prévue sur ledit arbre creux 21a.

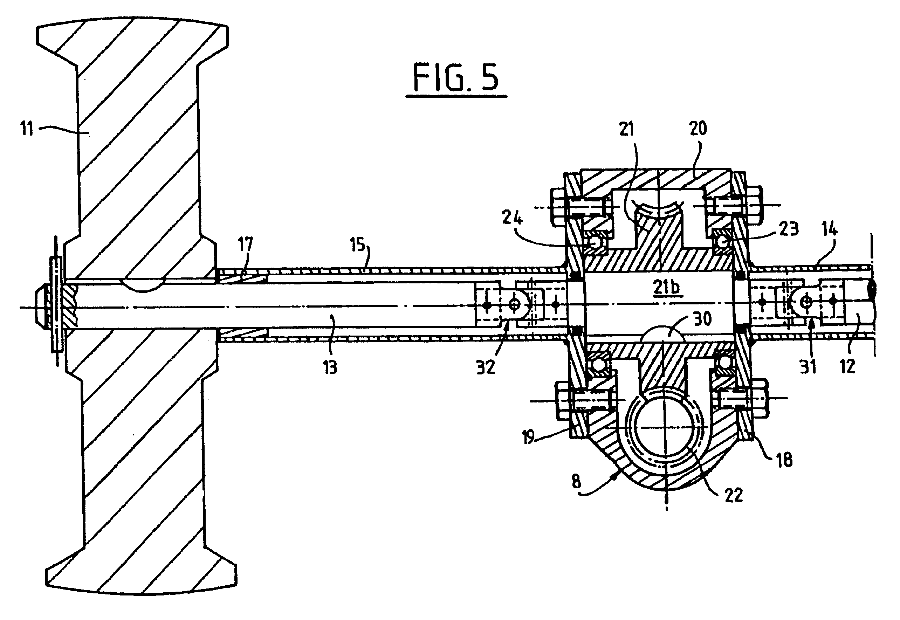

Dans le mode de réalisation représenté par la figure 5, le réducteur 8 possède la même structure que celle du réducteur 8 illustré par la figure 4 si ce n'est que la roue lente 21 est à arbre plein 21b, ce dernier étant entrainé en rotation par la roue 21 à l'aide d'une clavette 30. Par ailleurs, les extrémités de cet arbre plein 21b sont en prise respectivement avec les extrémités libres des tronçons d'arbre 12, 13 par l'intermédiaire de cardans 31, 32 extérieurs au carter 20 du réducteur.

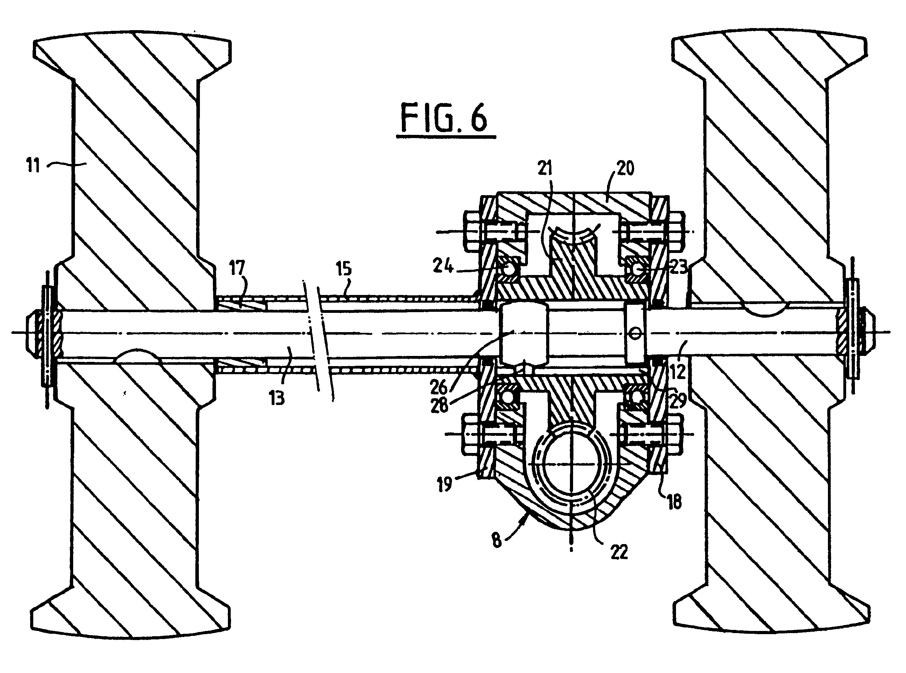

Comme le montrent les figure 3 et 6, les tronçons d'arbre 12, 13 peuvent en variante être de longueur différente. Dans ce mode de réalisation, le réducteur 8 possède la même structure que celle du réducteur 8 illustré par la figure 4, les tronçons d'arbre 12, 13 sont reliés entre-eux pour former un arbre unique, seule la rotule 26 pourvue de son doigt d'entrainement 28 a été conservée et seul le tronçon d'arbre 13 est monté à rotation dans sa gaine 15 équipée du palier 17, la roue 10 étant supportée directement par les roulements 23, 24 du réducteur. Le véhicule décrit ci-dessus dans ses différents modes de réalisation est complété par un bras de guidage 33 à l'arrière du châssis 1 et un système de commande (non représenté) incorporé à l'extrémité de ce bras de guidage 33, permettant de connecter, par l'intermédiaire d'un potentiomètre, la batterie 7 au moteur 6. Le châssis 1 est monté amovible sur les gaines 14, 15 ou seulement sur la gaine 15 dans le cas du mode de réalisation objet des figures 3 et 6, à l'aide d'une fixation rapidement démontable. Cette fixation peut par exemple consister en deux encoches 34 prévues sur le châssis 1 et venant en prise sur les gaines 14, 15. Du fait de la rigidité de ces dernières, l'ensemble constitué par le châssis et le groupe moto-propulseur présente également une bonne rigidité malgré l'autonomie évidente du groupe moto-propulseur. Enfin, le véhicule comporte un réceptacle 35 destiné à recevoir la charge à transporter et fixé par des montants 36, 37 montés respectivement sur la tige 2 et le bras de guidage 33.

**Revendications**

1. Groupe moto-propulseur amovible pour véhicule porteur de charge tel que chariot de golf, comprenant :

un moteur d'entraînement (6),

un réducteur (8) accouplé à ce moteur et monté à rotation à l'intérieur d'un carter (20) par l'intermédiaire de roulements (23, 24) portée intérieurement par ledit carter, et

un arbre moteur (9) pourvu d'une roue motrice (10, 11) à chacune de ses extrémités et constitué de deux tronçons d'arbre (12, 13) s'étendant respectivement de part et d'autre dudit réducteur, au moins l'un des tronçons d'arbre (12, 13) étant disposé à l'intérieur d'une gaine (14, 15) solidarisée par l'une de ses extrémités au carter (20) du réducteur (8),
caractérisé en ce que l'arbre moteur (9) est actionné en rotation directement par le réducteur (8) et en ce qu'au moins l'un des tronçons d'arbre est monté à rotation à l'intérieur de ladite gaine (14, 15) par l'intermédiaire d'un palier (16, 17).

2. Groupe moto-propulseur selon la revendication 1, caractérisé en ce que la gaine (14, 15) s'étend jusqu'au voisinage immédiat de la roue portée par le tronçon d'arbre inséré dans ladite gaine, le palier (16, 17) étant situé au voisinage immédiat de l'extrémité libre de cette gaine.

3. Groupe moto-propulseur selon la revendication 2, caractérisé en ce que les deux tronçons d'arbre sont de même longueur.

4. Groupe moto-propulseur selon la revendication 3, caractérisé en ce que chaque tronçon d'arbre est monté à rotation dans une gaine équipée de son palier.

5. Groupe moto-propulseur selon la revendication 2, caractérisé en ce que les deux tronçons d'arbre sont de longueur différente.

6. Groupe moto-propulseur selon la revendication 5, caractérisé en ce que seul le tronçon d'arbre le plus long est monté à rotation dans une gaine équipée de son palier.

7. Groupe moto-propulseur selon l'une des revendications précédentes, caractérisé en ce que le réducteur est à roue (21) et vis tangente (22).

8. Groupe moto-propulseur selon la revendication 7, dans lequel la roue (21) du réducteur est à arbre creux (21a), caractérisé en ce que chaque tronçon d'arbre est articulé sur cet arbre creux par l'intermédiaire d'une rotule (25, 26) disposée dans ledit arbre creux et reliée à ce dernier par un moyen d'entrainement (27, 28).

9. Groupe moto-propulseur selon la revendication 7, dans lequel la roue du réducteur est à arbre plein (21b), caractérisé en ce qu'au moins l'un des tronçons d'arbre est articulé sur cet arbre plein par l'intermédiaire d'un cardan (31, 32).

10. Véhicule porteur de charge tel que chariot de golf, comprenant un châssis (1), caractérisé en qu'il comprend en outre le groupe moto-propulseur selon l'une des revendications précédentes, le châssis étant pourvus de moyens (34) pour le solidariser de manière amovible à au moins une gaine dudit groupe moto-propulseur.

11. Véhicule selon la revendication 10, caractérisé en ce que lesdits moyens de solidarisation sont constitués par des encoches aptes à recevoir ladite gaine.

**Ansprüche**

1. Ausbaubare Antriebseinheit für Lasttragwagen wie Golfwagen mit :
   einer Antriebseinheit (6),
   einem Untersetzungsgetriebe (8), das mit diesem Motor gekuppelt und innerhalb eines Gehäuses (20) über Lagerungen (23, 24) drehbar gelagert ist, die innen vom Gehäuse getragen werden, und
   einer Antriebswelle (9) mit einem Antriebsrad (10, 11) an jedem Ende und aus zwei Wellenabschnitten (12, 13) bestehend, die sich jeweils beiderseits des Untersetzungsgetriebes erstrecken, wobei mindestens einer der Wellenabschnitte (12, 13) innerhalb einer Hülle (14, 15) angeordnet ist, die an einem Ende mit dem Gehäuse (20) des Untersetzungsgetriebes (8) fest verbunden ist, dadurch gekennzeichnet, daß die Antriebswelle (9) direkt vom Untersetzungsgetriebe (8) drehend betätigt wird und daß mindestens einer der Wellenabschnitte über eine Lagerung (16, 17) innerhalb der Hülle (14, 15) drehend gelagert ist.

2. Antriebseinheit nach Anspruch 1, dadurch gekennzeichnet, daß die Hülle (14, 15) sich bis inunmittelbare Nähe des Rads erstreckt, das vom in die Hülle eingesetzten Wellenabschnitt getragen wird, wobei die Lagerung (16, 17) in unmittelbarer Nähe des freien Endes dieser Hülle liegt.

3. Antriebseinheit nach Anspruch 2, dadurch gekennzeichnet, daß beide Wellenabschnitte gleich lang sind.

4. Antriebseinheit nach Anspruch 3, dadurch gekennzeichnet, daß jeder Wellenabschnitt in einer mit ihrer Lagerung versehenen Hülle drehbar gelagert ist.

5. Antriebseinheit nach Anspruch 2, dadurch gekennzeichnet, daß beide Wellenabschnitte unterschiedlich lang sind.

6. Antriebseinheit nach Anspruch 5, dadurch gekennzeichnet, daß der längste Wellenabschn itt in einer mit ihrer Lagerung versehenen Hülle drehbar gelagertist.

7. Antriebseinheit nach einem der vorhergehenden Ansprüche, dadurch gekennzeichnet, daß das Untersetzungsgetriebe ein Schneckenradgetriebe (22, 21) aufweist.

8. Antriebseinheit nach Anspruch 7, bei der das Rad (21) des Untersetzungsgetriebes eine Hohlwelle (21a) aufweist, dadurch gekennzeichnet, daß jeder Wellenabschnitt auf dieser Hohlwelle über ein Gelenklager (25, 26) angelenkt ist, das in der Hohlwelle angeordnet und mit dieser über ein Antriebsmittel (27, 28) verbunden ist.

9. Antriebseinheit nach Anspruch 7, bei den das Rad des Untersetzungsgetriebes eine volle Welle (21b) aufweist, dadurch gekennzeichnet, daß mindestens der eine Wel lenabschnitt auf dieser vollen Welle über ein Kardangelenk (31, 32) angelenkt ist.

10. Lasttragwagen wie ein Golfwagen mit einem Fahrgestell (1), dadurch gekennzeichnet, daß er außerdem die Antriebseinheit nach einem den vorhergenden Ansprüche umfaßt, wobei das Fahrgestell mit Mitteln (34) zum ausbaubaren Festverbinden mit mindestens einer Hülle der Antriebseinheit versehen ist.

11. Wagen nach Anspruch 10, dadurch gekennzeichnet, daß die Festverbindungsmittel von Kerben gebildet werden, die die Hülle aufnehmen können.

## Claims

1. A removable power unit for a load carrying vehicle such as a golf caddy, comprising :

a drive motor (6),

a reduction gear (8) coupled to said motor and mounted for rotation within a casing (20) through bearings (23, 24) carried internally by said casing, and

a drive shaft (9) provided with a drive wheel (10, 11) at each end thereof and formed of two shaft sections (12, 13) extending respectively on each side of said reduction gear, with at least one of the shaft sections (12, 13) being disposed inside a sleeve (14, 15) which is secured by one end thereof to the casing (20) of the reduction gear (8),

characterized in that the drive shaft (9) is rotatably driven directly by the reduction gear (8), and in that at least one of the shaft sections is rotatably mounted inside said sleeve (14, 15) through a bearing (16, 17).

2. The power unit according to claim 1, characterized in that the sleeve (14, 15) extends to the immediate vicinity of the wheel carried by the shaft section, which is inserted in said sleeve, with the bearing (16, 17) being situated in the immediate vicinity of the free end of said sleeve.

3. The power unit according to claim 2, characterized in that the two shaft sections are of the same length.

4. The power unit according to claim 3, characterized in that each shaft section is rotatably mounted in a sleeve equipped with its bearing.

5. The power unit according to claim 2, characterized in that the two shaft sections are of different lengths.

6. The power unit according to claim 5, characterized in that only the longest shaft section is rotatably mounted in a sleeve equipped with its bearing.

7. The power unit according to any of the preceding claims, characterized in that the reduction gear is of the worm (22) and worm wheel (21) type.

8. The power unit according to claim 7, wherein the worm wheel (21) of the reduction gear is of the hollow shaft (21a) type, characterized in that each shaft section is hinged to this hollow shaft through a ball joint (25, 26) disposed in said hollow shaft and connected thereto through a drive means (27, 28).

9. The power unit according to claim 7, wherein the worm wheel of the reduction gear is of the solid shaft (21b) type, characterized in that at least one of the shaft sections is hinged to said solid shaft through a universal joint (31, 32).

10. A load carrying vehicle such as a golf caddy, comprising a chassis (1), characterized in that it further comprises the power unit according to any of the preceding claims, the chassis being provided with means (34) for removably securing it to at least one sleeve of said power unit.

11. The vehicle according to claim 10, characterized in that said securing means are formed by notches adapted for receiving said sleeve.

# FIG.1

# FIG.2

# FIG.3

FIG.4

FIG. 5

EP 0 241 377 B1

# FIG. 6

EP 0 241 377 B1